# EUROPEAN PATENT SPECIFICATION

(11) **EP 2 553 843 B1**
(45) Date of publication and mention of the grant of the patent: **05.07.2017**
(21) Application number: 11762072.4
(22) Date of filing: 29.03.2011
(51) Int. Cl.: H04H 20/24, G06F 17/30, H04L 12/18, H04N 21/218, H04N 21/258, H04N 21/231, H04N 21/2747, H04N 21/845

(54) **DISTRIBUTION AND STORAGE OF BROADCAST TRANSMISSIONS**
VERTEILUNG UND SPEICHERUNG VON RUNDFUNKÜBERTRAGUNGEN
DISTRIBUTION ET STOCKAGE D'ÉMISSIONS RADIODIFFUSÉES

(30) Priority: 01.04.2010 FI 20105343
(43) Date of publication of application: 06.02.2013
(73) Proprietor: Elisa Oyj, 00520 Helsinki (FI)
(72) Inventor: AHRENBERG, Rolf, FI-02730 Espoo (FI); LIIMATAINEN, Janne, FI-02180 Espoo (FI)
(74) Representative: Espatent Oy
(86) International application number: PCT/FI2011/050258
(87) International publication number: WO 2011/121177

(56) References cited:
- EP-A1- 2 034 730
- WO-A2-2007/063430
- US-A1- 2002 029 282
- US-A1- 2005 120 377
- US-A1- 2005 183 120
- US-A1- 2009 083 811
- US-B1- 6 463 508
- KUN-LUNG WU ET AL: "Segment-based proxy caching of multimedia streams", PROCEEDINGS OF THE TENTH INTERNATIONAL CONFERENCE ON WORLD WIDE WEB , WWW '01, 1 January 2001 (2001-01-01), pages 36-44, XP055010125, New York, New York, USA DOI: 10.1145/371920.371933 ISBN: 978-1-58-113348-6
- YIU ET AL.: 'VMesh: Distributed Segment Storage for Peer-to-Peer Interactive Video Streaming' IEEE JOURNAL ON SELECTED AREAS IN COMMUNICATIONS vol. 25, no. 9, December 2007, pages 1717 - 1731
- LEE ET AL.: 'Performance-Aware Replication of Distributed Pre-Recorded IPTV Content' IEEE TRANSACTIONS ON BROADCASTING vol. 55, no. 2, June 2009, pages 516 - 526

## Description

The present invention relates generally to the distribution and storing of television or broadcast transmissions.

IPTV is an Internet protocol-based technology for the distribution of television transmissions. In various IPTV services, the client may, for example, store desired television programs in a storing space on the network and watch them at a freely definable time.

The programs to be stored can be selected from a program guide, for example, so that the system stores the program selected from the program guide on the basis of information given in the program guide (e.g., showing time). Typically, a small additional margin is added to the start and end of the storing in relation to the transmission times specified in the program guide. In such a solution, however, a client may only choose entire programs for storing, and the client has no possibility to influence the automatic additional margins set by the system, the start and end times or the naming of the record, for example.

US2005/0183120 discloses a multi-user storing arrangement located in a network, where the media to be stored is stored in small blocks. The blocks may be of a length of a few minutes or shorter, for example. US 6463508 discloses caching media streams at proxy servers. Media objects may be segmented such that smaller size segments are created at the beginning of the media object and later segments are made bigger.

Herein, a different storing arrangement is provided.

The first aspect of the invention provides a method for distributing broadcast transmissions to client devices. The method comprises:
receiving a broadcast transmission from one or several sources;
distributing the received broadcast transmission to client devices over a communication network;
storing the received broadcast transmissions; and
distributing the stored broadcast transmissions to client devices at freely chosen times. The method further comprises:
   storing received broadcast transmissions as clips of a predetermined length in a long-term data storage and a short-term data storage, where the length of clips stored in the long-term data storage is longer than the length of clips stored in the short-term data storage.

In an embodiment of the invention, the clips of a predetermined length are of a standard length. In another embodiment of the invention, the clips of a predetermined length are of a varying length.

In an embodiment of the invention, the method further comprises storing identification information related to the stored clips.

In an embodiment of the invention, the method further comprises receiving broadcast transmission storing requests from client devices, which storing requests are user-specific.

In an embodiment of the invention, broadcast transmissions are only stored in accordance with storing requests.

In an embodiment of the invention, a storing request defines a certain time interval.

In an embodiment of the invention, client devices are provided with an opportunity to change the time interval of a user-specific storing request made earlier.

In an embodiment of the invention, a storing request concerns momentary halting of a real-time broadcast transmission.

In an embodiment of the invention, the method further comprises:
receiving a display request concerning a broadcast transmission from a client device;
compiling the requested broadcast transmission from clips stored in said long-term and/or short-term data storage; and
delivering the requested broadcast transmission.

In an embodiment of the invention, at least part of the requested broadcast transmission is compiled from clips stored in the short-term data storage if the requested broadcast transmission is not available in the long-term data storage.

The second aspect of the invention provides an apparatus for distributing broadcast transmissions to client devices that is adapted to:
receive a broadcast transmission from one or several sources;
distribute the received broadcast transmission to client devices over a communication network;
store the received broadcast transmissions; and
distribute the stored broadcast transmissions to client devices at freely chosen times. Furthermore, the apparatus is adapted to:
   store received broadcast transmissions as clips of a predetermined length in a long-term data storage and a short-term data storage, where the length of clips stored in the long-term data storage is longer than the length of clips stored in the short-term data storage.

The apparatus in accordance with the second aspect of the invention may be adapted to perform a method in accordance with any embodiment related to the first aspect.

The third aspect of the invention provides a computer program which comprises a computer-executable program code which, when executed, controls a device to perform the method in accordance with the first aspect or an embodiment related to it.

The computer program in accordance with the third aspect may comprise a program code that is executable by any one of the following, for example: a general-purpose processor, a microprocessor, an application-specific integrated circuit, and a digital signal processor. The computer program in accordance with the third aspect may be stored on a computer-readable medium. Such a medium be a diskette, a CD-ROM, a DVD, a BD (Bluray Disc), a memory stick or another magnetic or optical memory medium.

The invention will be described in the following by way of example with reference to the appended drawings, wherein:
- Figure 1: shows a system in accordance with an embodiment of the invention;
- Figure 2: shows a device in accordance with another embodiment of the invention; and
- Figures 3-5: show methods in accordance with some embodiments of the invention.

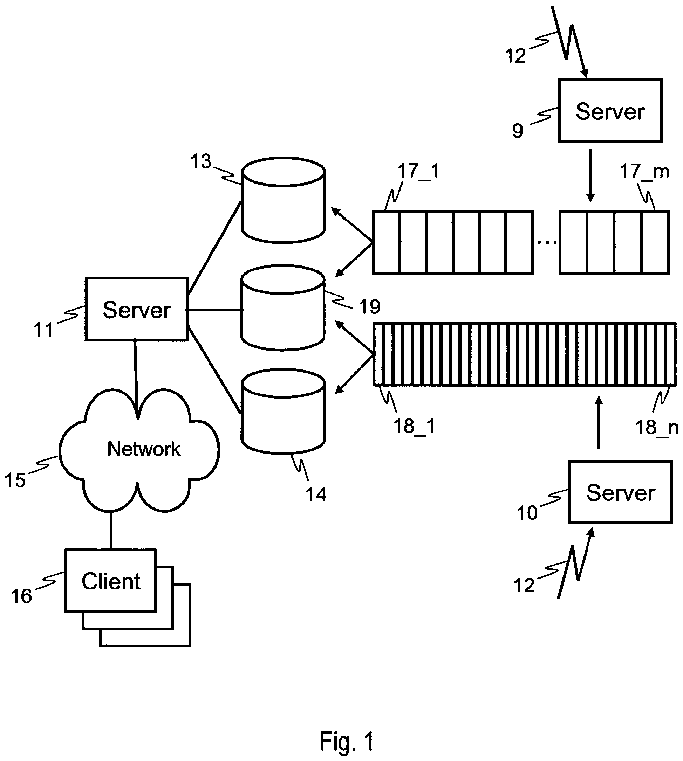

Figure 1 shows a system in accordance with an embodiment of the invention. The system comprises a server 11 providing IPTV service or comparable. In addition, the system comprises two servers 9 and 10 adapted to receive a broadcast transmission 12. The transmission 12 which the servers receive comprises, for example, television channels from one or several sources. The transmission may be MPEG-2 TS format video transmission, for example.

The server 11 is connected to a data storage 13 intended for long-term storing and to a data storage 14 intended for short-term storing, as well as to a database 19. The servers 9, 10 and 11 are adapted to store the received broadcast transmission 12 in the data storages 13 and 14.

The server 11 is connected to a data transmission network 15 and through it to client devices 16. The data transmission network 15 may consist of a number of different networks, such as the Internet and various broadband networks, such as ADSL, VDSL and Ethernet networks, and wireless networks, such as WLAN, GSM, UMTS and LTE networks. The client devices 16 may be set top box devices or computers or wireless terminal devices or other devices suitable for watching moving pictures/video. The server 11 is adapted to distribute the broadcast transmission 12 stored in the data storages 13 and 14 to client devices 16 through the data transmission network 15 on the basis of IPTV technology, for example.

The distribution may be performed, for example, by using Real Time Streaming Protocol (RTSP) or Hypertext Transfer Protocol (HTTP).

The servers 9 and 10 are adapted to store the broadcast transmission 12 received by them in the databases 13 and 14 in clips of a predetermined length so that the length of clips 17_1. . . 17_m to be stored in the database 13 intended for long-term storing is longer than the length of clips 18_1. . . 18_n to be stored in the database 14 intended for short-term storing. The clips to be stored may be of a standard length or their length may vary on the basis of time and or the contents of the transmission, for example. The length of clips 17_1. . . 17_m to be stored in the database 13 intended for long-term storing may be, for example, 5 minutes, 10 minutes, 30 minutes, or one hour or several hours. The length of clips 18_1. . . 18_m to be stored in the database 14 intended for short-term storing may be, for example, 1 second, 5 seconds, 10 seconds, 30 seconds, 1 minute, or some minutes. Other lengths are also possible. In addition, the servers 9 and 10 may store identification information on the clips stored in the data storages 13 and 14 in the database 19, which identification information contains, for example, the channel, the start and end times and the length of the clip. In other words, the servers 9 and 10 transfer the transmission 12 received by them to the data storages 13 and 14 and update storing information in the database 19. For example, the information "TV1, 1:05 p. m. to 1:10 p. m. is ready to be sent to clients" may be stored in the database 19.

The server 11 is adapted to read in the database 19 what clips have been stored in the data storages 13 and 14. The server 11 is also adapted to be responsible for the authentication and authorization of client devices 16.

In an embodiment of the invention, all of the received broadcast transmission 12 is stored in the data storages 13 and 14. In another embodiment of the invention, only that part of the broadcast transmission 12 is stored in the data storages 13 and 14 which has been requested to the stored. The server 11 may be adapted to receive storing requests from the client devices 16 and to control the servers 9 and 10 to store the transmissions that are requested to be stored.

In an embodiment of the invention, the database 14 intended for short-term storing is a ring buffer. The length of the buffer may be 36, 24, 12, 8, or 6 hours, for example. Other lengths are also possible. A transmission can be stored in the buffer the whole time or only according to need/in accordance with requests received from client devices. Continuous storing in a short-term database offers an opportunity for a time shift (delay of a live transmission) implemented on the server.

Note that only one server 11 is shown in Figure 1, but there may also be several parallel servers with the same functionality for the purpose of load-balancing, for example. There may also be several of the servers 9 and 10. Alternatively, the functionality of the servers 9, 10 and 11 may be combined to a single logical entity which is provided by one physical device (or several similar, parallel devices). In still another alternative, the server 11 is a separate server and the functionality of the servers 9 and 10 is combined into one server. The different servers may communicate with one another. For example, the server 11 may control the servers 9 and 10 to receive a certain transmission.

The data storages 13 and 14 and the database 19 have been shown as separate devices in the figure, but, alternatively, the data storages 13 and 14 and the database 19 may be located in one physical database server or they may be part of the server 11 or part of the servers 9 or 10. Correspondingly, the data storages 13 and 14 and the database 19 or one of them may comprise more than one physical device/database server.

In an embodiment of the invention, the long-term and short-term data storages 13 and 14 are kept separate on separate servers due to the different natures of the data storages.

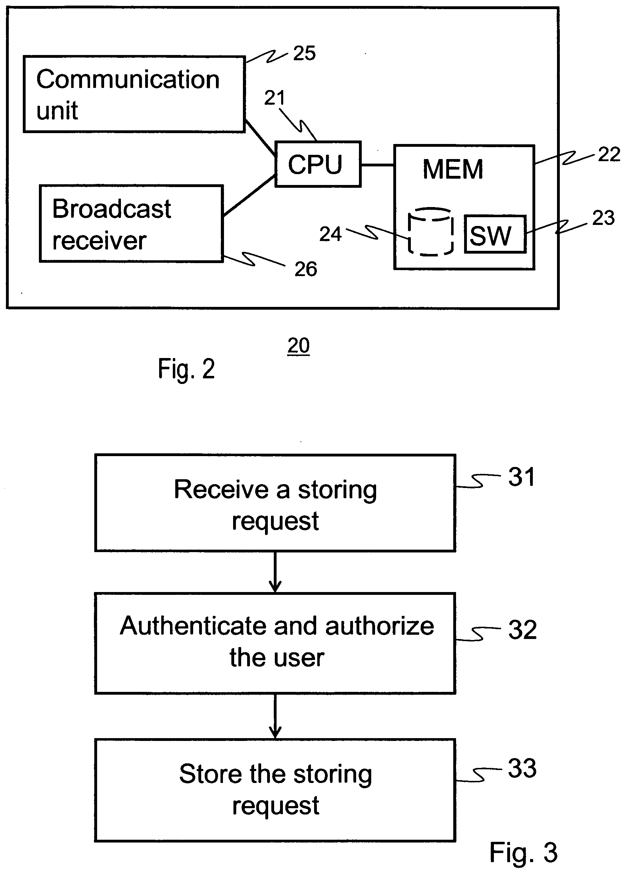

Figure 2 shows an example of a device 20 that is suited to the implementation of some embodiments of the invention. The device may be, for example, a general - purpose computer or a server, and it may be adapted to function as the server 9, 10 or 11 of Figure 1 or to provide the functionality of one or several of these.

The device 20 comprises a processor 21 for controlling the operation of the device and a memory 22 which comprises a computer program/software 23. The computer software may comprise instructions for the processor to control the device 20, such as an operating system and various applications, for example. Furthermore, the computer software 23 may comprise an application that comprises instructions for controlling the device 20 so that the functionality of some embodiment of the invention is produced.

The processor 21 may be, for example, a central processing unit (CPU), a digital signal processor (DSP), a graphics processor or similar. One processor is shown in the figure, but the device may have several processors.

The memory may be, for example, a read-only memory (ROM), a programmable read only memory (PROM), an erasable read-only memory, EPROM, an electronically erasable programmable read-only memory (EEPROM), a random-access memory (RAM), a flash memory, an optical or magnetic memory or comparable. The device may have several memories. The memory may be part of the device 20, or it may be a separate module that can be connected to the device 20. The memory may only be intended for storing data or it may also be used for data processing.

Furthermore, the device 20 comprises a communication unit 25 and a broadcast receiver 26. The communication unit provides an interface for communicating with other devices. The interface may be a fixed, wired connection, such as an Ethernet connection or an ADSL/VDSL connection, or a wireless connection, such as a WLAN, Bluetooth, GSM/GPRS, CDMA, WCDMA or LTE connection. The communication interface module may be integrated into the device 20, or it may be part of an adapter, card or comparable, which may be connected to the device 20. The communication unit may support one or several communication technologies, or the device may have several communication units. The broadcast receiver 26 receives a broadcast transmission, such as television programs, from one or several sources. In all of the embodiments of the invention, the device 20 does not necessarily comprise a broadcast receiver. For example, in the arrangement in Figure 1, the server 11 does not necessarily comprise a broadcast receiver 26.

To receive an input from the user and to provide outputs to the user, the device 20 may also comprise a user interface unit (not shown in the figure), which may comprise, for example, a display and a keyboard (not shown in the figure), which may be an integrated part of the device 20 or independent parts that can be connected to the device 20. However, a user interface is not necessarily needed, or the user interface may be implemented as a remote connection through the data communication unit 25.

The device 20 may also comprise one or several databases 24 (shown with a dotted line). The databases may comprise, for example, the data storages 13 and 14 and database 19 of Figure 1 or some of them.

In addition to the elements shown in Figure 2, the device 20 may also comprise other elements.

Figures 3-5 show methods in accordance with some embodiments, which methods may be applied in the system of Figure 1, for example, and at least partly in the servers 9, 10 and 11.

In Figure 3, a storing request is received from a client device in step 31. The storing request is authenticated (validation of the user) and authorized (validation of the access right) in step 32. The information necessary for the authentication and authorization may be stored in the database 19 of Figure 1, for example. The storing request may contain the following information, for example: the channel, the time, potentially the program information. The storing request is added to the database in step 33. For example, the server 11 of Figure 1 adds the storing request to the database 19. The storing request is user-specific and it is stored in a user-specific manner. However, the actual record is common to all users; in other words, several copies are not made of the record itself, but the exact time interval and potentially the name defined by the user him or herself are user-specific and the user may potentially change them even later. In an embodiment of the invention, the storing request may only concern future transmissions. In another embodiment of the invention, the storing request may also concern already past transmissions stored earlier. This is possible, for example, when the system stores all transmissions.

If the system only stores clips requested to be stored, it may be checked in step 33 whether someone else has already requested all of the requested clips (channel and time interval) to be stored. It this is so, an actual storing request for the clips in question need not be made as the clips in question have already been determined to be stored. In this case, it is enough that user-specific information on the storing is stored. In another embodiment of the invention, the system reads stored storing requests (for example, the servers 9 and 10 read storing requests from the database 19), and the record is placed in the data storage if one or several storing requests have been made for it.

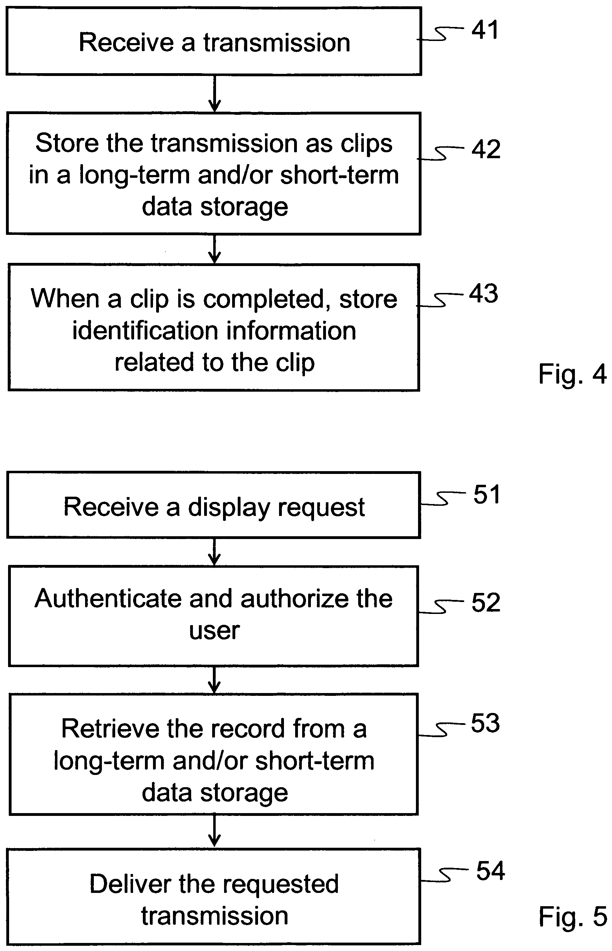

In Figure 4, a transmission is received in step 41; the received transmission is stored as clips in a long-term data storage and/or a short-term data storage in step 42. When a certain clip has been received and stored, identification information related to the clip in question is stored in step 42. The identification information may contain, for example, the channel, the start and end times and the length of the clip and potentially also information on the indexing of the clip. On the basis of this identification information, the system finds the necessary clips from the data storage(s). In an embodiment if the invention, the transmission is stored the whole time in both data storages. In another embodiment of the invention, the transmission is stored the whole time in the short-term data storage, and only those clips that have been requested to be stored are stored in the long-term data storage. If desired, it is also possible to only store clips requested to be stored in the short-term data storage as well. For example, the server 11 of Figure 1 may store information on clips that have been requested to be stored in the database 19, and the servers 9 and 10 may read which clips must be stored from the database 19.

In Figure 5, a record display request is received from a client device in step 51. The display request is authenticated (validation of the user) and authorized (validation of the access right) in step 52. The information needed for authentication and authorization may be stored in the database 19 of Figure 1, for example. In step 53, the requested transmission is retrieved from a long-term and/or short-term data storage, and, in step 54, the requested transmission is delivered over a communication network to the client device that sent the display request.

If the requested transmission or part of it is not found in the long-term data storage, it may be retrieved from the short-term data storage. This enables, for example, starting to watch the record in the middle of storing. If the client wants to start watching the record before it is in the long-term data storage in its entirety, the record may be delivered to the client device from the short-term data storage. Thus, the lengths of the clips to be stored in the long-term data storage do not restrict the start time of watching.

In an embodiment of the invention, particularly clips to be stored in a long-term data storage are indexed, after which the system knows the byte address of the desired timestamp within the clip. In this way, the transmission server, such as the server 11 of Figure 1, may begin reading a stored clip in the middle of the clip. The server knows, for example, at which byte address 35 min 20 s is within a clip of one hour.

The different embodiments of the invention enable the user to make a freely timed and named network record. Furthermore, the user may start watching the record before the end of the timing/storing. Furthermore, the user may be provided with the opportunity to add cutting entries to an existing record, on the basis of which the server defines the data to be sent to the user. Indexing of stored clips, among other things, enables the cutting entries mentioned above. Indexing allows achieving freely chosen cutting entries. However, even without indexing it is possible to give the user the opportunity to cut the record within the limits of the length of the clips stored in a long-term data storage. If the length of the clips is 5 minutes, for example, the user may cut his or her record as multiples of 5 minutes; in other words, the user may cut away, for example, 5, 10 or 15 minutes from the record.

In an embodiment of the invention, clips to be stored in the data storages are of a standard length. In another embodiment of the invention, the length of clips to be stored in the data storages may vary. An embodiment of the invention where the system stores information on the lengths of the stored clips in a database (for example, the database 19 of Figure 1) enables use of clips of varying length. The lengths of the clips may vary on the basis of some predetermined criterion, such as the time of day or the contents of the record, for example. Typically, many programs of a length of half an hour are shown during the early evening and films during the late evening, whereby it may be more efficient to use shorter clips during the early evening than during the late evening.

The description given above provides non-limiting examples of some embodiments of the invention. It is apparent to persons skilled in the art that the invention is not confined to the details presented above, but that the invention may also be implemented in other equivalent ways. For example, it is to be appreciated that, in the above methods, the order of the individual steps of the method may be changed and some steps may be repeated several times or omitted altogether. It is also to be appreciated that the terms 'comprise' and 'include' as used in this document are open-ended expressions and not intended to be limiting.

In addition, some features of the presented embodiments of the invention may be utilized without employing other features. The above description must be regarded as an explanation describing the principles of the invention and not as limiting the invention. The scope of the invention is only limited by the appended claims.

## Claims

1. A method for distributing broadcast transmissions to client devices from a server, wherein the method comprises:
receiving (41) a broadcast transmission (12) from one or several sources;
distributing the received broadcast transmission (12) to client devices (16) over a communication network;
storing the received broadcast transmissions; and
distributing the stored broadcast transmissions to client devices (16) at freely chosen times, **characterized in that** storing the received broadcast transmissions comprises:
storing (42) by the server the received broadcast transmissions (12) as clips of a predetermined length in a long-term data storage (13) and a short-term data storage (14), where the length of clips (17_1, 17_m) to be stored in the long-term data storage (13) is longer than the length of clips (18_1, 18_n) to be stored in the short-term data storage (14), and **in that** the method comprises
receiving a broadcast transmission display request from a client device (16), and
distributing the stored broadcast transmission to the client device (16) comprises distributing the stored broadcast transmission from the short-term storage if the broadcast transmission display request is received before the requested broadcast transmission is in the long-term data storage in its entirety and the transmission or part of it is not found in the long-term data storage.

2. A method as claimed in claim 1, **characterized in that** said clips of a predetermined length (17_1, 17_m, 18_1, 18_n) are of a standard length.

3. A method as claimed in claim 1, **characterized in that** said clips of a predetermined length (17_1, 17_m, 18_1, 18_n) are of a varying length.

4. A method as claimed in any one of claims 1-3, **characterized in that** said method further comprises:
receiving (31) broadcast transmission storing requests from client devices, which storing requests are user-specific.

5. A method as claimed in claim 4, **characterized in that** only broadcast transmissions in accordance with storing requests are stored.

6. A method as claimed in claim 4 or 5, **characterized in that** the storing request concerns momentary halting of a real-time broadcast transmission.

7. A method as claimed in any one of claims 1-6, **characterized in that** the length of clips to be stored in the long-term data storage is 5 minutes.

8. A method as claimed in any one of claims 1-7, **characterized in that** the length of clips to be stored in the short-term data storage is 10 seconds.

9. A method as claimed in any one of claims 1-8, **characterized in that** the method further comprises:
receiving (51) a display request concerning a broadcast transmission from a client device;
compiling (53) the requested broadcast transmission from clips stored in said long-term (13) and/or short-term data storage (14); and
delivering (54) the requested broadcast transmission.

10. A method as claimed in claim 9, **characterized in that** at least part of the requested broadcast transmission is compiled from clips stored in the short-term data storage (14) if the requested broadcast transmission is not available in the long-term data storage (13).

11. An apparatus (9, 10, 11, 20) for distributing broadcast transmissions to client devices that is adapted to:
receive a broadcast transmission (12) from one or several sources;
distribute the received broadcast transmission (12) to client devices (16) over a communication network;
store the received broadcast transmissions; and
distribute the stored broadcast transmissions to client devices (16) at freely chosen times, **characterized in that** the apparatus is further adapted to:
store the received broadcast transmissions (12) as clips of a predetermined length in a long-term data storage (13) and a short-term data storage (14), where the length of clips (17_1, 17_m) to be stored in the long-term data storage (13) is longer than the length of clips (18_1, 18_n) to be stored in the short-term data storage (14), and to
receive a broadcast transmission display request from a client device (16), and
distribute the stored broadcast transmission to the client device (16) from the short-term storage if the broadcast transmission display request is received before the requested broadcast transmission is in the long-term data storage in its entirety and the requested transmission or part of it is not found in the long-term data storage.

12. An apparatus as claimed in claim 11, **characterized in that** said clips of a predetermined length (17_1, 17_m, 18_1, 18_n) are of a standard length.

13. An apparatus as claimed in claim 11, **characterized in that** said clips of a predetermined length (17_1, 17_m, 18_1, 18_n) are of a varying length.

14. An apparatus as claimed in claim 11, 12 or 13, **characterized in that** the apparatus is further adapted to perform a method as claimed in any one of claims 4-10.

15. A computer program comprising a computer-executable program code, **characterized in that**, when executed, the program code controls a computer to carry out a method as claimed in any one of claims 1-10.

## Patentansprüche

1. Verfahren zum Verteilen von Rundfunkübertragungen an Client-Geräte von einem Server, wobei das Verfahren umfasst:
Empfangen (41) einer Rundfunkübertragung (12) von einer oder mehreren Quellen;
Verteilen der empfangenen Rundfunkübertragung (12) an Client-Geräte (16) über ein Kommunikationsnetzwerk;
Speichern der empfangenen Rundfunkübertragungen; und
Verteilen der gespeicherten Rundfunkübertragungen an Client-Geräte (16) zu frei gewählten Zeiten, **dadurch gekennzeichnet, dass** Speichern der empfangenen Rundfunkübertragungen umfasst:
Speichern (42) der empfangenen Rundfunkübertragungen (12) durch den Server als Ausschnitte einer vorbestimmten Länge in einem Langzeitdatenspeicher (13) und einem Kurzzeitdatenspeicher (14), wobei die Länge von in dem Langzeitdatenspeicher (13) zu speichernden Ausschnitten (17_1, 17_m) länger ist als die Länge von in dem Kurzzeitdatenspeicher (14) zu speichernden Ausschnitten (18_1, 18_n), und dadurch, dass das Verfahren umfasst:
Empfangen einer Rundfunkübertragungs-Anzeigeanforderung von einem Client-Gerät (16), und
wobei Verteilen der gespeicherten Rundfunkübertragung an das Client-Gerät (16) Verteilen der gespeicherten Rundfunkübertragung von dem Kurzzeitdatenspeicher umfasst, falls die Rundfunkübertragungs-Anzeigeanforderung empfangen wird bevor sich die angeforderte Rundfunkübertragung in ihrer Gesamtheit im Langzeitdatenspeicher befindet und die Übertragung oder ein Teil von ihr nicht in dem Langzeitdatenspeicher gefunden wird.

2. Verfahren gemäß Anspruch 1, **dadurch gekennzeichnet, dass** die Ausschnitte einer vorbestimmten Länge (17_1, 17_m, 18_1, 18_n) eine Standardlänge aufweisen.

3. Verfahren gemäß Anspruch 1, **dadurch gekennzeichnet, dass** die Ausschnitte einer vorbestimmten Länge (17_1, 17_m, 18_1, 18_n) eine variierende Länge aufweisen.

4. Verfahren gemäß einem der Ansprüche 1-3, **dadurch gekennzeichnet, dass** das Verfahren weiterhin umfasst:
Empfangen (31) von Rundfunkübertragungs-Speicheranforderungen von Client-Geräten, wobei die Speicheranforderungen benutzerspezifisch sind.

5. Verfahren gemäß Anspruch 4, **dadurch gekennzeichnet, dass** nur Rundfunkübertragungen gemäß Speicheranforderungen gespeichert werden.

6. Verfahren gemäß Anspruch 4 oder 5, **dadurch gekennzeichnet, dass** die Speicheranforderung vorübergehendes Unterbrechen einer Echtzeit-Rundfunkübertragung betrifft.

7. Verfahren gemäß einem der Ansprüche 1-6, **dadurch gekennzeichnet, dass** die Länge von in dem Langzeitdatenspeicher zu speichernden Ausschnitten 5 Minuten beträgt.

8. Verfahren gemäß einem der Ansprüche 1-7, **dadurch gekennzeichnet, dass** die Länge von in dem Kurzzeitdatenspeicher zu speichernden Ausschnitten 10 Sekunden beträgt.

9. Verfahren gemäß einem der Ansprüche 1-8, **dadurch gekennzeichnet, dass** das Verfahren weiterhin umfasst:
Empfangen (51) einer Anzeigeanforderung von einem Client-Gerät, die eine Rundfunkübertragung betrifft;
Zusammenstellen (53) der angeforderten Rundfunkübertragung aus Ausschnitten, die in dem Langzeit- (13) und/oder Kurzzeitdatenspeicher (14) gespeichert sind; und
Übermitteln (54) der angeforderten Rundfunkübertragung.

10. Verfahren gemäß Anspruch 9, **dadurch gekennzeichnet, dass** zumindest ein Teil der angeforderten Rundfunkübertragung aus Ausschnitten zusammengestellt wird, die in dem Kurzzeitdatenspeicher (14) gespeichert sind, falls die angeforderte Rundfunkübertragung nicht in dem Langzeitdatenspeicher (13) verfügbar ist.

11. Vorrichtung (9, 10, 11, 20) zum Verteilen von Rundfunkübertragungen an Client-Geräte, die angepasst ist:
eine Rundfunkübertragung (12) von einer oder mehreren Quellen zu empfangen;
die empfangene Rundfunkübertragung (12) über ein Kommunikationsnetzwerk an Client-Geräte (16) zu verteilen;
die empfangenen Rundfunkübertragungen zu speichern; und
die gespeicherten Rundfunkübertragungen an Client-Geräte (16) zu frei gewählten Zeiten zu verteilen, **dadurch gekennzeichnet, dass** die Vorrichtung weiterhin angepasst ist:
die empfangenen Rundfunkübertragungen (12) als Ausschnitte einer vorbestimmten Länge in einem Langzeitdatenspeicher (13) und einem Kurzzeitdatenspeicher (14) zu speichern, wobei die Länge von in dem Langzeitdatenspeicher (13) zu speichernden Ausschnitten (17_1, 17_m) länger ist als die Länge von in dem Kurzzeitdatenspeicher (14) zu speichernden Ausschnitten (18_1, 18_n), und:
eine Rundfunkübertragungs-Anzeigeanforderung von einem Client-Gerät (16) zu empfangen, und
die gespeicherte Rundfunkübertragung von dem Kurzzeitdatenspeicher an das Client-Gerät (16) zu verteilen, falls die Rundfunkübertragungs-Anzeigeanforderung empfangen wird bevor sich die angeforderte Rundfunkübertragung in ihrer Gesamtheit im Langzeitdatenspeicher befindet und die angeforderte Übertragung oder ein Teil von ihr nicht in dem Langzeitdatenspeicher gefunden wird.

12. Vorrichtung gemäß Anspruch 11, **dadurch gekennzeichnet, dass** die Ausschnitte einer vorbestimmten Länge (17_1, 17_m, 18_1, 18_n) eine Standardlänge aufweisen.

13. Vorrichtung gemäß Anspruch 11, **dadurch gekennzeichnet, dass** die Ausschnitte einer vorbestimmten Länge (17_1, 17_m, 18_1, 18_n) eine variierende Länge aufweisen.

14. Vorrichtung gemäß Anspruch 11, 12 oder 13, **dadurch gekennzeichnet, dass** die Vorrichtung weiterhin angepasst ist, ein Verfahren gemäß einem der Ansprüche 4-10 durchzuführen.

15. Computerprogramm umfassend einen computerausführbaren Programmcode, **dadurch gekennzeichnet, dass**, wenn ausgeführt, der Programmcode einen Computer steuert, ein Verfahren gemäß einem der Ansprüche 1-10 durchzuführen.

## Revendications

1. Procédé pour distribuer des émissions radiodiffusées vers des dispositifs clients à partir d'un serveur, dans lequel le procédé comprend les étapes consistant à :
recevoir (41) une émission radiodiffusée (12) en provenance d'une ou de plusieurs sources ;
distribuer l'émission radiodiffusée reçue (12) à des dispositifs clients (16) sur un réseau de communication ;
stocker les émissions radiodiffusées reçues ; et
distribuer les émissions radiodiffusées stockées vers des dispositifs clients (16) à des moments librement choisies, **caractérisé en ce que** le stockage des émissions radiodiffusées reçues comprend l'étape consistant à :
stocker (42) par le serveur les émissions radiodiffusées reçues (12) sous forme de clips d'une longueur prédéterminée dans un stockage de données à long terme (13) et un stockage de données à court terme (14), dans lequel la longueur des clips (17_1, 17_m) destinés à être stockés dans le stockage de données à long terme (13) est supérieure à la longueur des clips (18-1, 18_n) destinés à être stockés dans le stockage de données à court terme (14), et **en ce que** le procédé comprend l'étape consistant à
recevoir une demande d'affichage d'émission radiodiffusée en provenance d'un dispositif client (16), et
l'étape consistant à distribuer l'émission radiodiffusée stockée au dispositif client (16) comprend la distribution de l'émission radiodiffusée stockée à partir du stockage à court terme si la demande d'affichage d'émission radiodiffusée est reçue avant que l'émission radiodiffusée demandée ne se trouve dans le stockage de données à long terme dans son intégralité et que l'émission ou une partie de celle-ci ne se trouve pas dans le stockage de données à long terme.

2. Procédé selon la revendication 1, **caractérisé en ce que** lesdits clips d'une longueur prédéterminée (17_1, 17_m, 18_1, 18_n) sont d'une longueur standard.

3. Procédé selon la revendication 1, **caractérisé en ce que** lesdits clips d'une longueur prédéterminée (17_1, 17_m, 18_1, 18_n) sont d'une longueur variable.

4. Procédé selon l'une quelconque des revendications 1 à 3, **caractérisé en ce que** ledit procédé comprend en outre l'étape consistant à :
recevoir (31) des demandes de stockage d'émission radiodiffusée en provenance de dispositifs clients, lesquelles demandes de stockage sont spécifiques à un utilisateur.

5. Procédé selon la revendication 4, **caractérisé en ce que** seules les émissions de radiodiffusion conformes aux demandes de stockage sont stockées.

6. Procédé selon la revendication 4 ou 5, **caractérisé en ce que** la demande de stockage concerne l'arrêt momentané d'une émission radiodiffusée en temps réel.

7. Procédé selon l'une quelconque des revendications 1 à 6, **caractérisé en ce que** la longueur des clips destinés à être stockés dans le stockage de données à long terme est de 5 minutes.

8. Procédé selon l'une quelconque des revendications 1 à 7, **caractérisé en ce que** la longueur des clips destinés à être stockés dans le stockage de données à court terme est de 10 secondes.

9. Procédé selon l'une quelconque des revendications 1 à 8, **caractérisé en ce que** le procédé comprend en outre les étapes consistant à :
recevoir (51) une demande d'affichage concernant une émission radiodiffusée en provenance d'un dispositif client ;
compiler (53) l'émission radiodiffusée demandée à partir de clips stockés dans ledit stockage de données à long terme (13) et / ou à court terme (14) ; et
délivrer (54) l'émission radiodiffusée demandée.

10. Procédé selon la revendication 9, **caractérisé en ce qu'**au moins une partie de l'émission radiodiffusée demandée est compilée à partir de clips stockés dans le stockage de données à court terme (14) si l'émission radiodiffusée demandée n'est pas disponible dans le stockage de données à long terme (13).

11. Appareil (9, 10, 11, 20) pour distribuer des émissions radiodiffusées vers des dispositifs clients qui sont adaptés pour :
recevoir une émission radiodiffusée (12) en provenance d'une ou plusieurs sources ;
distribuer l'émission radiodiffusée reçue (12) à des dispositifs clients (16) sur un réseau de communication ;
stocker les émissions radiodiffusées reçues ; et
distribuer les émissions radiodiffusées stockées vers des dispositifs clients (16) à des moments librement choisis, **caractérisé en ce que** l'appareil est en outre adapté pour :
stocker les émissions radiodiffusées reçues (12) sous la forme de clips d'une longueur prédéterminée dans un stockage de données à long terme (13) et un stockage de données à court terme (14), dans lequel la longueur des clips (17_1, 17_m) destinés à être stockés dans le stockage de données à long terme (13) est supérieure à la longueur des clips (18_1, 18_n) destinés à être stockés dans le stockage de données à court terme (14), et pour
recevoir une demande d'affichage d'émission radiodiffusée en provenance d'un dispositif client (16), et
distribuer l'émission radiodiffusée stockée au dispositif client (16) à partir du stockage à court terme si la demande d'affichage de l'émission radiodiffusée est reçue avant que l'émission radiodiffusée demandée ne se trouve dans le stockage de données à long terme dans son intégralité et que l'émission demandée ou une partie de celle-ci ne se trouve pas dans le stockage de données à long terme.

12. Appareil selon la revendication 11, **caractérisé en ce que** lesdits clips d'une longueur prédéterminée (17_1, 17_m, 18_1, 18_n) sont d'une longueur standard.

13. Appareil selon la revendication 11, **caractérisé en ce que** lesdits clips d'une longueur prédéterminée (17_1, 17_m, 18_1, 18_n) sont d'une longueur variable.

14. Appareil selon la revendication 11, 12 ou 13, **caractérisé en ce que** l'appareil est en outre adapté pour exécuter un procédé selon l'une quelconque des revendications 4 à 10.

15. Programme informatique comprenant un code de programme exécutable par ordinateur, **caractérisé en ce que**, lors de son exécution, le code de programme commande un ordinateur pour réaliser un procédé selon l'une quelconque des revendications 1 à 10.
